# DEMANDE DE BREVET EUROPEEN

(11) **EP 2 857 642 A1**
(43) Date de publication de la demande: **08.04.2015**
(21) Numéro de dépôt: 14173955.7
(22) Date de dépôt: 25.06.2014
(51) Int. Cl.: F01L 13/00, F02D 13/06, F01L 1/053

(54) **Ensemble d'un système à arbres à cames et d'un distributeur rotatif hydraulique pour un moteur**

(30) Priorité: 04.07.2013 FR 1356557
(71) Demandeur: PEUGEOT CITROËN AUTOMOBILES SA, 78140 Velizy-Villacoublay (FR)
(72) Inventeur: Bouattay, Ouanes, 78440 GARGENVILLE (FR)

(57) **Abrégé**

L'invention porte sur un ensemble d'un système d'arbres à cames d'admission (3) et d'échappement (4) pour l'ouverture et la fermeture sélectives de soupapes d'admission et d'échappement de chaque cylindre d'un moteur et d'un distributeur (6) rotatif hydraulique pour la désactivation tournante d'au moins un cylindre du moteur, au moins un arbre (3) du système d'arbres (3, 4) étant muni d'un mécanisme VVT provoquant un déphasage sur ledit au moins un arbre (3) par rapport à la rotation induite par le moteur, le distributeur (6) rotatif étant relié par un dispositif d'entraînement (5, 7) sur l'arbre (3) dit associé du système présentant le déphasage, le dispositif d'entraînement (5, 7) présentant une roue menée (5) solidarisée au distributeur (6) et entraînée par un pignon menant (7) positionné sur l'arbre (3) associé sur une portion (10) entraînée en rotation par le moteur sans subir le déphasage provoqué par le mécanisme VVT.

## Description

L'invention porte sur un ensemble composé d'un système à arbres à cames et d'un distributeur rotatif hydraulique pour un moteur à combustion interne. Le distributeur rotatif hydraulique effectue la désactivation tournante d'au moins un cylindre du moteur, un dispositif d'entraînement reliant le distributeur hydraulique à un des arbres à cames du système, cet arbre à cames étant muni d'un mécanisme VVT ou de distribution à calage variable des soupapes, dénommée en anglais « variable valve timing mechanism ».

De manière connue, un système d'arbres à cames est associé à un moteur à combustion interne pour l'ouverture et la fermeture sélectives des soupapes d'admission et d'échappement de chaque cylindre du moteur. Un tel système d'arbres à cames comporte un arbre à cames d'admission et un arbre à cames d'échappement, chacun de ces arbres comportant une série de cames, chaque came contrôlant l'ouverture d'une soupape respectivement d'admission et d'échappement.

Généralement, il y a autant de cames sur un arbre à cames d'admission ou d'échappement qu'il y a de soupapes d'admission ou d'échappement pour le moteur à combustion interne, les cylindres du moteur pouvant cependant présenter plus d'une soupape d'admission et d'échappement par cylindre.

La synchronisation des arbres à cames avec l'arbre moteur ou vilebrequin se fait avantageusement par l'intermédiaire de poulies dentées ou crantées autour desquelles s'enroule une chaîne ou une courroie crantée, cette chaîne ou courroie crantée s'enroulant d'autre part autour de la poulie de vilebrequin pour l'entraînement des poulies.

Le diamètre des poulies dentées est adapté à la configuration du moteur pour la commande synchronisée des soupapes. Par exemple, dans des moteurs à quatre temps à combustion interne, le cycle complet de combustion nécessite deux tours de vilebrequin pour un tour d'un arbre à cames. Dans ce cas, chaque arbre à cames peut par conséquent tourner deux fois moins vite que le vilebrequin du moteur.

Il est connu d'associer généralement à l'arbre à cames d'admission un mécanisme VVT ou mécanisme de distribution à calage variable des soupapes. Un tel mécanisme VVT permet de changer la phase de rotation de l'arbre à cames d'admission par rapport à la phase de rotation du vilebrequin de sorte que la synchronisation des soupapes d'admission puisse être changée.

Un tel mécanisme VVT permet d'obtenir une commande de la synchronisation des soupapes qui dépend de certaines conditions de fonctionnement du moteur, ces conditions pouvant être très différentes lors de la circulation du véhicule avec un tel moteur à combustion interne. Ainsi, il est possible d'améliorer la consommation en carburant du véhicule de même que les émissions d'échappement du véhicule.

Il est aussi connu un dispositif de désactivation tournante de cylindres ou dispositif DSS permettant la désactivation de certains cylindres du moteur, notamment par désactivation de la distribution pour certaines soupapes du moteur. De tels systèmes de désactivation de cylindres en charge partielle existent depuis plusieurs années sur les moteurs V6 et V8, et plus récemment sur les moteurs à essence à quatre cylindres en ligne.

Un tel dispositif de désactivation peut se faire de façon hydraulique par un distributeur rotatif hydraulique. Ce distributeur rotatif hydraulique est activé par rotation d'une roue menée solidarisée au distributeur hydraulique. Un exemple d'un dispositif DSS permettant la désactivation d'au moins un cylindre d'un moteur à combustion interne est donné par le document FR-A-2 946 693.

Selon l'état de la technique, cette roue menée est raccordée à un pignon d'entraînement porté par un des arbres à cames, avantageusement l'arbre à cames d'admission. La commande de la désactivation tournante peut alors effectuée par le distributeur rotatif hydraulique, par exemple en tournant à ¼ de la vitesse du vilebrequin.

Un problème est donc posé quand le distributeur rotatif hydraulique est relié directement à un arbre d'un système d'arbres à cames doté d'un mécanisme VVT ou mécanisme de distribution à calage variable des soupapes. Le fonctionnement du distributeur rotatif hydraulique est alors perturbé par le mécanisme VVT. En effet, comme l'arbre à cames est déphasé par rapport le mécanisme VVT, ce déphasage est alors transmis à la roue menée du distributeur rotatif hydraulique et au distributeur lui-même.

Selon l'état de la technique, le pignon menant du distributeur est fréquemment fretté sur l'arbre à cames d'admission. Dans ce cas, lors du déphasage de l'arbre à cames provoqué par le mécanisme VVT, le pignon du distributeur est déphasé lui aussi, ce qui n'est pas optimal pour le fonctionnement du système de distribution hydraulique. En effet, le distributeur est à caler avec la distribution, ceci sans déphasage généré par le mécanisme VVT et ceci nuit au fonctionnement du dispositif de désactivation tournante de cylindres.

Par conséquent, le problème à la base de l'invention est dans un ensemble d'un système d'arbres à came et d'un dispositif DSS permettant la désactivation d'au moins un cylindre du moteur, ce dispositif étant muni d'un distributeur rotatif hydraulique solidarisé à un des arbres du système lui-même doté d'un mécanisme VVT ou de distribution à calage variable des soupapes pour au moins un de ses arbres, d'empêcher que le déphasage transmis audit arbre par le mécanisme VVT ne soit transmis au distributeur rotatif du dispositif DSS.

Pour atteindre cet objectif, il est prévu selon l'invention un ensemble d'un système d'arbres à cames d'admission et d'échappement, destiné à être entraîné en rotation par un moteur à combustion interne pour l'ouverture et la fermeture sélectives d'au moins une soupape d'admission et d'au moins une soupape d'échappement pour chaque cylindre dudit moteur, et d'un distributeur rotatif hydraulique pour la désactivation tournante d'au moins un cylindre du moteur, au moins un arbre du système d'arbres à cames étant muni d'un mécanisme VVT ou de distribution à calage variable des soupapes, le mécanisme VVT provoquant un déphasage sur ledit au moins un arbre par rapport à la rotation induite par le moteur, le distributeur rotatif étant relié par un dispositif d'entraînement sur l'arbre associé du système présentant le déphasage, le dispositif d'entraînement présentant une roue menée solidarisée au distributeur, cette roue menée étant entraînée par un pignon menant positionné sur l'arbre associé, caractérisé en ce que le pignon menant est positionné sur une portion de l'arbre associé, la portion de l'arbre associé étant entraînée en rotation par le moteur sans subir le déphasage provoqué par le mécanisme VVT.

L'effet technique est d'obtenir un entraînement du distributeur non perturbé par le mécanisme VVT provoquant un déphasage en rotation, déphasage qui serait néfaste au fonctionnement du distributeur, celui-ci devant être en phase avec la distribution.

Avantageusement, chaque arbre à cames du système présente une poulie destinée à être entraînée en rotation par le moteur, la poulie de l'arbre associé au pignon menant présentant un corps non soumis au déphasage provoqué par le mécanisme VVT, le corps de la poulie dudit arbre associé formant la portion sur laquelle est positionné le pignon menant.

Avantageusement, chaque arbre à cames 3, 4 est sous la forme d'une tige présentant la poulie à une de ses extrémités.

Avantageusement, le corps de la poulie de l'arbre associé au pignon menant présente un embout entourant une partie de l'extrémité de l'arbre associé qui lui est adjacente, le pignon menant étant positionné sur cet embout.

Avantageusement, l'embout entoure la partie de l'extrémité de l'arbre associé en laissant un jeu entre eux.

Avantageusement, l'embout présente un élément de centrage à sa périphérie pour le positionnement du pignon menant sur lui.

Avantageusement, le distributeur rotatif hydraulique est intercalé entre l'arbre à cames d'admission et l'arbre à cames d'échappement.

Avantageusement, l'arbre associé au pignon menant et présentant le déphasage provoqué est l'arbre à cames d'admission.

L'invention concerne aussi un moteur comprenant au moins une soupape d'admission et au moins une soupape d'échappement pour chacun de ses cylindres, caractérisé en ce qu'il comprend un tel ensemble.

L'invention concerne enfin un procédé de montage sur un moteur d'un tel ensemble comprenant un système d'arbres à cames et un distributeur rotatif reliés par un dispositif d'entraînement présentant une roue menée portée par le distributeur et un pignon menant porté par un arbre à cames du système, cet arbre étant dit arbre associé et présentant un déphasage provoqué par un mécanisme VVT, caractérisé en ce qu'il comprend les étapes suivantes :
- positionnement du pignon menant sur une portion de l'arbre associé, la portion étant entraînée en rotation sans subir le déphasage transmis par le mécanisme VVT à l'arbre associé,
- positionnement du distributeur de façon que la roue menée du distributeur engrène avec le pignon de l'arbre associé.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue en perspective d'un mode de réalisation d'un ensemble composé d'un système d'arbres à cames et d'un distributeur rotatif hydraulique selon la présente invention,
- la figure 2 est une représentation schématique d'une vue latérale de l'ensemble montré en figure 1.

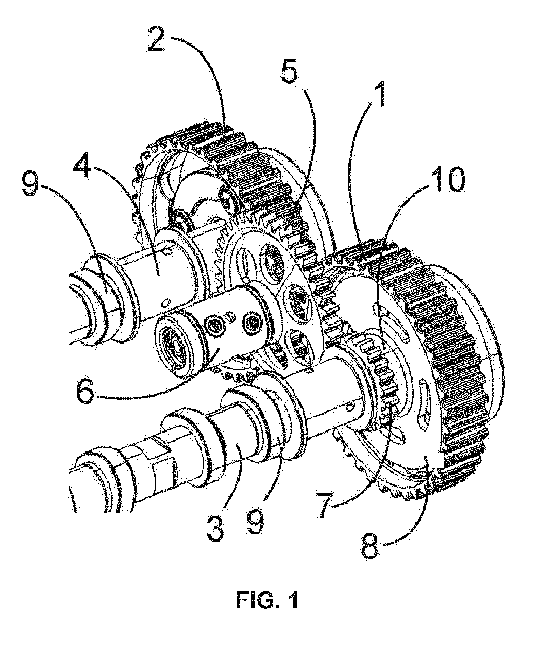

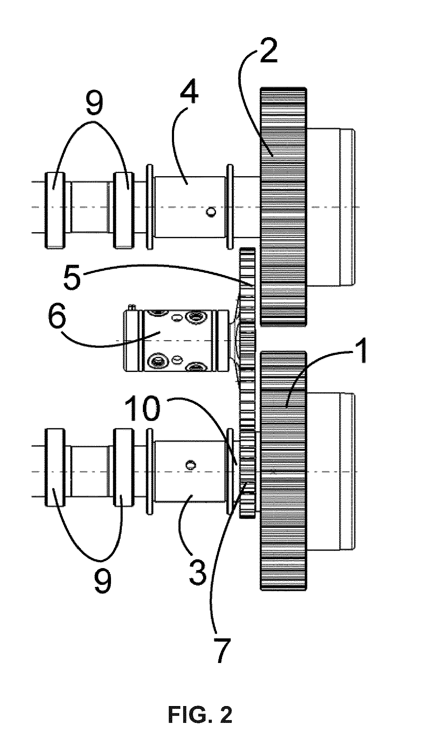

Les figures 1 et 2 montrent une partie d'un système d'arbres à cames destiné à être associé à un moteur à combustion interne pour l'ouverture et la fermeture sélectives des soupapes d'admission et d'échappement d'au moins un cylindre de ce moteur, une ou plusieurs soupapes d'admission et plusieurs soupapes d'échappement pouvant exister pour un même cylindre.

De manière connue, un tel système d'arbres à cames comporte un arbre à cames d'admission 3 et un arbre à cames d'échappement 4, chacun de ces arbres 3, 4 comportant une série de cames 9. Chaque arbre à cames d'admission 3 ou d'échappement 4 est muni d'autant de cames qu'il y a de soupapes d'admission ou d'échappement dans le moteur.

Dans le cas où il y a plusieurs soupapes d'admission ou d'échappement pour un même cylindre, par exemple deux soupapes d'admission ou d'échappement, les cames 9 d'un arbre à cames 3, 4 sont disposées par groupes en correspondance avec le nombre de soupapes d'admission ou d'échappement d'un même cylindre, par exemple par paires.

Chaque arbre à cames 3, 4 est sous la forme d'une tige cylindrique dont seule une partie est visible aux figures 1 et 2. Quand une came 9 d'un arbre à cames 3, 4 exerce une action sur sa soupape associée, celle-ci est mécaniquement poussée, perpendiculairement à l'axe de rotation de l'arbre à cames 3, 4. Les ouvertures et fermetures de soupapes se font donc totalement mécaniquement, à un certain rythme dépendant du régime moteur.

Le profil des cames 9 de l'arbre à cames d'admission 3 et de l'arbre à cames d'échappement 4 peut être différent afin de coopérer respectivement avec les soupapes d'admission ou d'échappement.

La synchronisation des arbres à cames 3, 4 avec l'arbre du moteur se fait par l'intermédiaire de poulies 1, 2, avantageusement dentées ou crantées autour desquelles s'enroule une chaîne ou une courroie crantée, cette chaîne ou courroie crantée s'enroulant d'autre part autour de la poulie de vilebrequin, la chaîne ou courroie et la poulie de vilebrequin n'étant pas visibles aux figures.

Le diamètre des poulies 1, 2 est adapté à la configuration du moteur pour la commande synchronisée des soupapes. Par exemple, dans un moteur à quatre temps à combustion interne, le cycle complet de combustion nécessite deux tours de vilebrequin pour un tour d'arbre à cames. Un arbre à cames 3, 4 peut ainsi tourner deux fois moins vite que le vilebrequin du moteur.

Aux figures, le système d'arbres à cames 3, 4 est équipé d'un mécanisme dit VVT ou de distribution à calage variable des soupapes, dénommée en anglais « variable valve timing mechanism ».

Un tel mécanisme VVT permet de changer la phase de rotation d'au moins un arbre à cames, ici l'arbre à cames d'admission 3 par rapport à la phase de rotation du vilebrequin de sorte que la synchronisation des soupapes d'admission puisse être changée et déphasée par rapport à la rotation transmise à la poulie associée de l'arbre à cames, ici la poulie 1. Le mécanisme VVT provoque donc un déphasage sur au moins un arbre 3 du système d'arbres à cames 3, 4 par rapport à la rotation induite par le moteur. Le mécanisme VVT n'est pas visible aux figures 1 et 2.

Avantageusement, au moins la poulie 1 ne subit pas le déphasage créé par le mécanisme VTT qui est directement transmis à son arbre à cames 3, ici l'arbre à cames d'admission. La poulie 1 présente donc un corps 8 qui est fixe par rapport à ce déphasage, la rotation des corps 8 des poulies 1, 2 ne s'effectuant que par l'entraînement de la courroie ou de la chaîne entraînée par le vilebrequin du moteur.

Aux figures, il est montré un distributeur 6 rotatif hydraulique pour la désactivation tournante des cylindres du moteur à combustion interne associé. La commande de la désactivation tournante est alors effectuée par le distributeur rotatif hydraulique tournant à ¼ de la vitesse du vilebrequin.

Le distributeur 6 rotatif est relié à un 3 des arbres 3, 4 du système par un dispositif d'entraînement 5, 7. Cet arbre à cames 3 est muni d'un mécanisme VVT ou de distribution à calage variable des soupapes. Aux figures 1 et 2, ce qui n'est pas limitatif, le distributeur 6 est lié mécaniquement à l'arbre à cames d'admission 3.

Dans le mode de réalisation décrit aux figures, le dispositif d'entraînement rotatif porte une roue menée 5 solidarisée au distributeur 6. Cette roue menée 5 est entraînée par un pignon menant 7 positionné sur ledit au moins un arbre 3 présentant le déphasage.

Pour éviter que le déphasage en rotation provoqué par le mécanisme VVT ne vienne perturber le fonctionnement du distributeur 6, selon l'invention, il est prévu que le pignon menant 7 soit positionné sur une portion 10 de l'arbre à cames 3 associé qui ne subit pas le déphasage imposé au reste de l'arbre 3 par le mécanisme VVT, aux figures l'arbre à cames d'admission 3. La portion 10 de cet arbre 3 est alors entraînée seulement en rotation par le moteur du vilebrequin sans subir le déphasage provoqué par le mécanisme VVT.

La forme et la localisation de la portion 10 montrée aux figures ne sont pas limitatives et cette portion 10 peut prendre une autre forme que celle illustrée tant que cette portion 10 n'est pas soumise au déphasage provoqué par le mécanisme VVT.

La portion 10 sélectionnée de l'arbre 3 associé est dite alors fixe par rapport au mécanisme VVT dans le sens où ce mécanisme n'interagit pas sur sa rotation, la portion 10 étant seulement entraînée par le vilebrequin par l'intermédiaire de la poulie 1 associée.

Avantageusement, c'est le corps 8 de la poulie 1 de l'arbre 3, ce corps 8 n'étant pas soumis au déphasage provoqué par le mécanisme VVT, qui sert de portion de positionnement du pignon menant 7. Le mot corps 8 est à prendre dans son sens large, une portion 10 pouvant être ajoutée au corps 8 de poulie 1 proprement dit, ceci de manière amovible ou pas, pourvu que la portion 10 soit solidaire en rotation du corps 8 de poulie 1.

Aux figures, le corps 8 de la poulie 1 de l'arbre 3 recevant le pignon menant 7 du dispositif d'entraînement présente un embout 10 entourant une partie de l'extrémité de l'arbre 3 associé qui est adjacente à la poulie 1, le pignon menant 7 étant positionné sur cet embout 10. Avantageusement, l'embout 10 entoure la partie de l'extrémité de l'arbre 3 associé en laissant un jeu entre eux.

Ainsi, l'arbre 3 peut tourner par rapport à l'embout 10 sans l'entraîner, la rotation de l'arbre, ici l'arbre à cames d'admission 3, présentant un déphasage provoqué par le mécanisme VVT mais ce déphasage n'étant pas transmis à l'embout 10.

Pour le centrage du pignon menant 7, il peut être prévu un élément de centrage à la périphérie de l'embout 10 pour le positionnement du pignon menant 7 sur lui. Cet élément peut être une rainure ou un centrage court obtenu par usinage.

Avantageusement, comme montré aux figures, le distributeur 6 rotatif hydraulique est intercalé entre l'arbre à cames d'admission 3 et l'arbre à cames d'échappement 4. La roue menée 5 peut être d'un plus grand diamètre que le pignon menant 7.

L'invention concerne aussi un moteur comprenant au moins un cylindre et une soupape d'admission et d'échappement pour ledit au moins un cylindre, caractérisé en ce qu'il comprend un tel ensemble formé d'un système à arbres à cames et d'un distributeur rotatif hydraulique.

Dans le procédé de montage sur un moteur d'un tel ensemble comprenant un système d'arbres à cames 3, 4 et un distributeur 6 rotatif reliés par un dispositif d'entraînement présentant une roue menée 5 portée par le distributeur 6 et un pignon menant 7 porté par un arbre à cames 3 du système, cet arbre étant dit arbre 3 associé et présentant un déphasage provoqué par un mécanisme VVT, il est prévu les étapes suivantes :
- positionnement du pignon menant 7 sur une portion de l'arbre 3 associé, la portion étant entraînée en rotation sans subir le déphasage transmis par le mécanisme VVT à l'arbre 3 associé,
- positionnement du distributeur 6 de façon que la roue menée 5 du distributeur 6 engrène avec le pignon 7 de l'arbre 3 associé.

Ceci peut aisément être fait avec un arbre à cames 3, 4 selon l'état de la technique en démontant la poulie 1, 2 de l'arbre à cames 3, 4, en aménageant ou en ajoutant une portion 10 de positionnement pour le pignon menant 7, en usinant une zone de réception sur ladite portion 10 pour la réception du pignon menant 7 puis en remontant la poulie 1, 2 sur son arbre à cames 3, 4.

L'invention n'est nullement limitée aux modes de réalisation décrits et illustrés qui n'ont été donnés qu'à titre d'exemples.

## Revendications

1. Ensemble d'un système d'arbres à cames d'admission (3) et d'échappement (4), destiné à être entraîné en rotation par un moteur à combustion interne pour l'ouverture et la fermeture sélectives d'au moins une soupape d'admission et d'au moins une soupape d'échappement pour chaque cylindre dudit moteur, et d'un distributeur (6) rotatif hydraulique pour la désactivation tournante d'au moins un cylindre du moteur, au moins un arbre (3) du système d'arbres à cames (3, 4) étant muni d'un mécanisme VVT ou de distribution à calage variable des soupapes, le mécanisme VVT provoquant un déphasage sur ledit au moins un arbre (3) par rapport à la rotation induite par le moteur, le distributeur (6) rotatif étant relié par un dispositif d'entraînement (5, 7) sur l'arbre (3) du système présentant le déphasage dit arbre associé, le dispositif d'entraînement (5, 7) présentant une roue menée (5) solidarisée au distributeur (6), cette roue menée (5) étant entraînée par un pignon menant (7) positionné sur l'arbre (3) associé, **caractérisé en ce que** le pignon menant (7) est positionné sur une portion (10) de l'arbre (3) associé, la portion (10) de l'arbre (3) associé étant entraînée en rotation par le moteur sans subir le déphasage provoqué par le mécanisme VVT.

2. Ensemble selon la revendication 1, pour lequel chaque arbre à cames (3, 4) du système présente une poulie (1, 2) destinée à être entraînée en rotation par le moteur, la poulie (1) de l'arbre (3) associé au pignon menant (7) présentant un corps (8) non soumis au déphasage provoqué par le mécanisme VVT, le corps (8) de la poulie (1) dudit arbre (3) associé portant la portion (10) sur laquelle est positionné le pignon menant (7).

3. Ensemble selon la revendication 2, pour lequel chaque arbre à cames (3, 4) est sous la forme d'une tige présentant sa poulie (1, 2) à une de ses extrémités.

4. Ensemble selon la revendication 3, pour lequel le corps (8) de la poulie (1) de l'arbre (3) associé au pignon menant (7) présente un embout (10) entourant une partie de l'extrémité de l'arbre (3) associé qui lui est adjacente, le pignon menant (7) étant positionné sur cet embout (10).

5. Ensemble selon la revendication 4, pour lequel l'embout (10) entoure la partie de l'extrémité de l'arbre (3) associé en laissant un jeu entre eux.

6. Ensemble selon la revendication 4 ou 5, pour lequel l'embout (10) présente un élément de centrage à sa périphérie pour le positionnement du pignon menant (7) sur lui.

7. Ensemble selon l'une quelconque des revendications précédentes, pour lequel le distributeur (6) rotatif hydraulique est intercalé entre l'arbre à cames d'admission (3) et l'arbre à cames d'échappement (4).

8. Ensemble selon l'une quelconque des revendications précédentes, pour lequel l'arbre associé au pignon menant (7) et présentant le déphasage est l'arbre à cames d'admission (3).

9. Moteur comprenant au moins une soupape d'admission et au moins une soupape d'échappement pour chacun de ses cylindres, **caractérisé en ce qu'**il comprend un ensemble selon l'une quelconque des revendications précédentes.

10. Procédé de montage sur un moteur d'un ensemble selon l'une quelconque des revendications 1 à 8, l'ensemble comprenant un système d'arbres à cames (3, 4) et un distributeur (6) rotatif reliés par un dispositif d'entraînement présentant une roue menée (5) portée par le distributeur (6) et un pignon menant (7) porté par un arbre à cames (3) du système, cet arbre étant dit arbre (3) associé et présentant un déphasage provoqué par un mécanisme VVT, **caractérisé en ce qu'**il comprend les étapes suivantes :
- positionnement du pignon menant (7) sur une portion de l'arbre (3) associé, la portion étant entraînée en rotation sans subir le déphasage transmis par le mécanisme VVT à l'arbre (3) associé,
- positionnement du distributeur (6) de façon que la roue menée (5) du distributeur (6) engrène avec le pignon (7) de l'arbre (3) associé.
